# EUROPÄISCHE PATENTSCHRIFT

(11) **EP 1 097 068 B1**
(45) Veröffentlichungstag und Bekanntmachung des Hinweises auf die Patenterteilung: **18.07.2007**
(21) Anmeldenummer: 00938526.1
(22) Anmeldetag: 03.05.2000
(51) Int. Cl.: B60T 7/06, G05G 1/14

(54) **BETÄTIGUNGSPEDAL FÜR DIE BREMSANLAGE EINES STRASSENFAHRZEUGES**
ACTUATOR PEDAL FOR THE BRAKE SYSTEM OF A ROAD VEHICLE
PEDALE D'ACTIONNEMENT POUR LE SYSTEME DE FREINAGE D'UN VEHICULE ROUTIER

(30) Priorität: 11.05.1999 DE 19921552
(43) Veröffentlichungstag der Anmeldung: 09.05.2001
(73) Patentinhaber: ZF Lemförder Metallwaren AG, 49441 Lemförde (DE)
(72) Erfinder: ERSOY, Metin, D-65396 Walluf (DE); ROGOWSKI, Waldemar, D-49078 Osnabrück (DE); WAGENER, Keit, D-49143 Bissendorf (DE)
(86) Internationale Anmeldenummer: PCT/DE2000/001371
(87) Internationale Veröffentlichungsnummer: WO 2000/068050

(56) Entgegenhaltungen:
- EP-A- 0 704 333
- EP-A- 0 788 954
- DE-A- 3 427 097
- US-A- 4 009 623
- US-A- 4 404 439

## Beschreibung

Die Erfindung betrifft ein Betätigungspedal für die Bremsanlage eines Straßenfahrzeuges mit einer Befestigungsvorrichtung zur Festlegung des Betätigungspedals in einem Drehlager an einem karosseriefesten Pedalblock des Fahrzeuges, einer Verbindungsvorrichtung zu einem Bremskraftverstärkermodul, einem Pedalkörper und einer Betätigungstrittfläche.

Betätigungspedale der eingangs geschilderten, gattungsgemäßen Art werden seit langem bei Nutz- und Kraftfahrzeugen eingesetzt. Die Betätigungspedale haben hierbei hohen Anforderungen hinsichtlich Festigkeit und Verbindungssteifheit zu genügen, wobei zu beachten ist, daß insbesondere in Situationen von Panik- oder Vollbremsungen durch den Fahrzeugführer außerordentlich hohe Kräfte auf das Betätigungspedal aufgebracht werden.

Darüber hinaus ist eine hohe Verwindungssteifigkeit auch deshalb wünschenswert und erforderlich, um beim Treten des Betätigungspedals jederzeit ein direktes gutes Bremsgefühl für den Fahrzeugführer bereitzustellen.

Aufgrund dieser Erfordernisse sind die zum gegenwärtigen Zeitpunkt verwendeten Betätigungspedale ausnahmslos aus Stahl gefertigt. Üblicherweise wird ein derartiges Bauteil aus Stahlblech hergestellt, wobei der gesamte Herstellungsvorgang aus mehreren Umformprozessen besteht und an den Pedalkörper als Basisblechteil zusätzliche weitere Bauteile - beispielsweise zur Anbringung von Rückholfedern oder zur Betätigung von Endschaltern - angeschweißt werden. Die Anzahl der einzelnen Bearbeitungsschritte macht trotz Automatisierungstechnik bei der Herstellung die Produktion derartiger gattungsgemäßer Betätigungspedale im Vergleich zu anderen Fahrzeugkomponenten besonders teuer, da zusätzlich nach Beendigung des eigentlichen Formvorganges eine abschließende Oberflächenbehandlung in Form einer Farbbeschichtung üblich ist. Darüber hinaus haben die im Stand der Technik verwendeten Betätigungspedale den gravierenden Nachteil, daß sie aufgrund ihrer Bauart ein relativ hohes Gewicht besitzen, was sich insbesondere im Falles.eines Unfalles nachteilig auswirken kann.

Die EP 0 788 954 A1 zeigt beispielsweise ein Bremspedal aus einem Kunststoffkörper, welcher zur Versteifung eine Verrippung aufweist und daher sehr groß aufbaut sowie Konstruktiv sehr aufwendig ist. Darüber hinaus offenbart die US 4,009,623 ein Pedal aus einem Kunststoffkörper, wobei dieser Kunststoffkörper in einem Teilbereich einen Metallkern aufweist, welcher von dem Kunststoffkörper umgeben ist. Die Lagerung des Pedals erfolgt ausschließlich über eine Metallhülse, die formschlüssig auf einem drehbar gelagerten Zapfen aufgenommen ist. Diese Art der Lagerung ist damit sehr aufwendig und kostenintensiv gestaltet.

Aufgabe der vorliegenden Erfindung ist es daher, ein Betätigungspedal der eingangs geschilderten Art bereitzustellen, welches die aus dem Stand der Technik bekannten Nachteile herkömmlicher Betätigungspedale vermeidet. Insbesondere sollen bei der Produktion erhebliche Kostenersparnisse erreicht werden. Darüber hinaus soll das Betätigungsgefühl beim Bremsvorgang weiter optimiert werden.

Diese Aufgabe wird erfindungsgemäß in Zusammenschau mit den gattungsbildenden Merkmalen des Hauptanspruches dadurch gelöst, daß in die Kunststoffummantelung eine Lagerfläche integriert ist, die Bestandteil des Drehlagers ist.

Die konstruktiven Merkmale des Betätigungspedales stellen zum einen durch die Verwendung eines innenliegenden Metallkernes die Verwindungssteifigkeit und hohe Bruchbelastbarkeit des Betätigungspedales sicher, darüber hinaus erlaubt die Kunststoffummantelung eine optimierte Formgebung für das Betätigungspedal, wobei der gesamte Herstellvorgang mittels Hybridtechnologie besonders kostengünstig gestaltet werden kann. Es entfallen im Rahmen der Produktion eine ganze Anzahl von Fertigungsschritten bis hin zu einer nicht mehr notwendigen abschließenden Oberflächenbehandlung des erfindungsgemäßen Betätigungspedales.

Erfindungsgemäß ist es vorteilhaft, wenn im Rahmen der Ummantelung des Metallkernes die Befestigungsvorrichtung zur Festlegung des Betätigungspedals an einer karosseriefesten Halterung einstückig mit der Kunststoffummantelung ausgeführt wird. Die für die Verschwenkung des Betätigungspedales notwendigen Lagerstellen lassen sich durch die Kunststoff-Spritztechnik problemlos in die Ummantelung integrieren.

Spezielle Ausgestaltungen des Gegenstandes der Erfindung ergeben sich aus den Merkmalen der Unteransprüche.

Es ergibt sich als weiterer Vorteil der Erfindung, daß zusätzliche Anbauelemente beispielsweise für die Betätigung eines Bremslichtschalters oder die Anhängung von Federrückholmechanismen problemlos in die Kunststoffunamantelung integriert werden können. Hierfür sind ausgehend von der einmaligen Formgestaltung für den Spritzvorgang der Kunststoffummantelung keine weiteren besonderen Verfahrens-und Produktionsschritte notwendig.

Es hat sich ferner als zweckmäßig erwiesen, den Metallkern als einfach geformten Stahlblechkern auszuführen, der im Rahmen eines unkomplizierten Umformvorganges hergestellt werden kann. Als Material für die Kunststoffummantelung wird vorzugsweise PA 6 oder PA 6.6/GF verwendet. Darüber hinaus läßt sich die Betätigungstrittfläche im Zweikomponentenverfahren an den Pedalkörper anspritzen, wobei die Betätigungstrittfläche eine Auflageschicht aus Polyurethan erhält.

Die erfindungsgemäße Gestaltung des Pedalkörpers ermöglicht es darüber hinaus, die Befestigungsvorrichtung des Betätigungspedals mit einem Stiftelement zu versehen, welches an seinem freien, der Befestigungsvorrichtung abgewandten Ende, mindestens eine gefederte Druckrolle aufweist, die bei Verschwenkung des Betätigungspedals um den Drehlagerpunkt der Befestigungsvorrichtung auf einer korrespondierenden Kurvenbahn am karosseriefesten Pedalblock abrollt. Die Kurvenbahn am Pedalblock läßt sich je nach gewünschten Kraftverlauf für die Rückholung des Pedals entsprechend anpassen, so daß sich ein optimales

Betätigungsgefühl für den Fahrzeugführer ergibt. Darüber hinaus kann die Kurvenbahn so gestaltet werden, daß das Betätigungspedal trotz vorhandener Fertigungstoleranzen nach dem Einbau automatisch spielfrei ist, so daß eine unmittelbare Bremswirkung bei der Betätigung der Bremsanlage gewährleistet ist.

Es hat sich darüber hinaus als besonders vorteilhaft erwiesen, daß der Pedalkörper an derjenigen Stelle, an der dieser mit der Verbindungsvorrichtung zum Bremskraftverstärkermodul zusammenwirkt, ein Langloch aufweist, in das eine Schubstange der Verbindungsvorrichtung verschieblich angeordnet ist. Die Langlochgestaltung bewirkt eine uneingeschränkte Gradführung der Schubstange, so daß ein zusätzliches Kugelgelenk zur Bereitstellung weiterer Freiheitsgrade bei der Bewegung der Betätigungsstange entfallen kann. Außerdem kann der Pedalwinkel größer und damit die Pedallänge kürzer ausgeführt werden.

Im folgenden wird ein Ausführungsbeispiel des Gegenstandes der Erfindung anhand der beigefugten Zeichnungen näher erläutert.

Es zeigen:
- Figur 1:: eine Seitenansicht des erfindungsgemäßen Betätigungspedals angebaut an den Pedalblock eines Kraftfahrzeuges und
- Figur. 2:: eine Querschnittdarstellung durch das erfindungsgemäße Betätigungspedal aus Figur 1 entlang der Linie B-B.

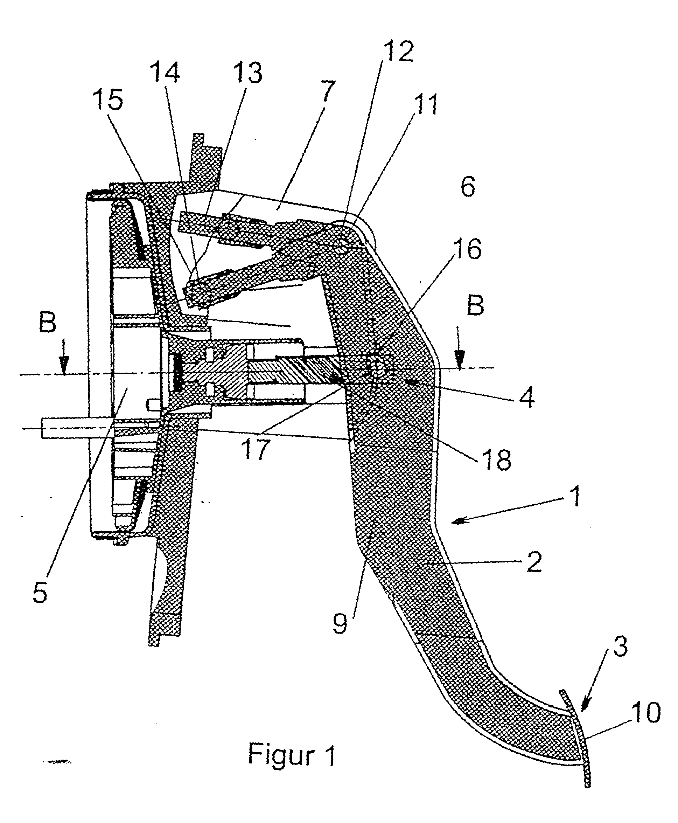

Das in Figur 1 in seiner Gesamtheit mit 1 bezeichnete Betätigungspedal für die Bremsanlage eines Straßenfahrzeuges weist im wesentlichen einen Pedalkörper 2, eine Betätigungstrittfläche 3, eine Verbindungsvorrichtung 4 zu einem

Bremskraftverstärkermodul 5 und eine Befestigungsvorrichtung 6 zur Festlegung des Betätigungspedales 1 an einem karosseriefesten Pedalblock 7 des Straßenfahrzeuges auf.

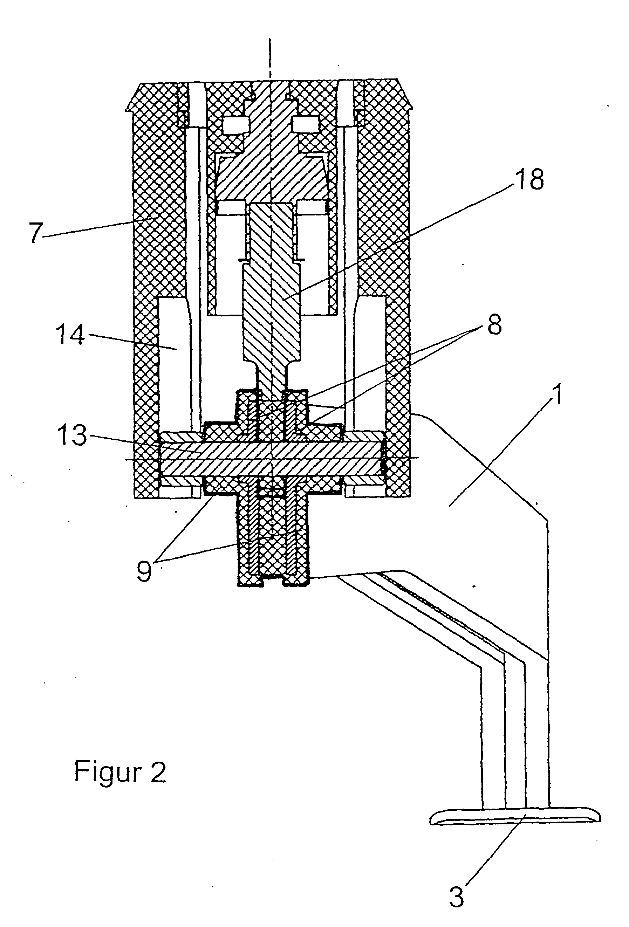

Der Pedalkörper 2 besteht aus zwei innenliegenden Metallkernen 8, die vollständig von einer Kunststoffummantelung 9 aus PA 6 oder aus PA 6.6/GF umschlossen sind, wie dies aus der Figur 2 ersichtlich ist. Die Metallkerne 8 weisen in diesem Ausführungsbeispiel im wesentlichen einen rechteckförmigen Querschnitt auf, welcher in Bezug auf die geforderte Verwindungssteifigkeit des Betätigungspedals besonders vorteilhaft ist. Im Bereich der Verbindungsvorrichtung 4 sind die Metallkerne jeweils mit einer Ausnehmung versehen, durch die ein Stiftelement 13 der Verbindungsvorrichtung hindurchgeführt ist. Diese Ausgestaltung der Metallkerne 8 innerhalb der Kunststoffummantelung 9 kann ebenfalls der Figur 2 entnommen werden. Die Metallkerne sind vorzugsweise aus Stahlblech hergestellt und weisen eine Dicke von 1,5 - 2 mm auf Diese Dicke ist in Verbindung mit der die Metallkerne 8 umgebenden Kunststoffummantelung 9 ausreichend, um eine gleiche oder nochmals verbesserte Torsionssteifigkeit gegenüber den aus dem Stand der Technik bekannten, herkömmlichen und insgesamt ganz aus Stahlblech hergestellten Betätigungspedalen zu gewährleisten. Die geringere Materialdicke in Verbindung mit dem geringen Gewicht der Kunststoffummantelung 9 bewirkt darüberhinaus eine Gewichtsreduzierung des gesamten Betätigungspedales 1 um mehr als 50 Gewichtsprozent.

Durch die Umspritzung des Metallkernes 8 mit der Kunststoffummantelung 9 ist es gleichzeitig möglich, die Betätigungstrittfläche 3 einstückig mit der Kunststoffummantelung auszuführen, diese gleichzeitig mit einer zusätzlichen Auflageschicht 10 aus Polyurethan zu versehen und so eine entsprechende Rutschfestigkeit an der Betätigungstrittfläche 3 zu gewährleisten. In die Kunststoffummantelung ist darüber hinaus eine Lagerfläche 11 integriert, die Bestandteil des Drehlagers 12 ist, durch welches das Betätigungspedal 1 am Pedalblock 7 schwenkbar festgelegt ist. Am oberen Ende des Betätigungspedales 1 ist als zusätzlicher Bestandteil der Befestigungsvorrichtung 6 ein Stiftelement 13 fest mit der Kunststoffummantelung 9 des Betätigungspedales 1 verbunden. Das Stiftelement 13 ist an seinem vorderen, freien, der Befestigungsvorrichtung 6 abgewandten Ende mit mindestens einer Druckrolle 14 versehen, welche durch eine im Inneren des Stiftelementes 13 befindliche, hier nicht näher dargestellte, Schraubenfeder bis zu einer Maximalposition nach außen gedrückt wird. Die Druckrolle 14 liegt im zusammengebauten Zustand von Betätigungspedal 1 und Pedalblock 7 an einer Kurvenbahn 15 an.

Wird das Betätigungspadal 1 durch den Fahrzeugführer um das Drehlager 12 herum verschwenkt, so rollt die Druckrolle 14 auf der Kurvenbahn 15 ab, wobei die im Stiftelement 13 angeordnete Druckfeder zusammengedrückt wird. Das Zusammendrücken der Druckfeder bewirkt die für eine Rückstellung des Betätigungspedales notwendigen Kräfte, wobei die Gestaltung der Kurvenbahn 15 direkten Einfluss auf die Größe der Rückstellkräfte hat und sich somit durch die Kurvenbahngestalt eine direkte Beeinflussung des Betätigungsgefühls bei Verschwenkung des Betätigungspedales ergibt.

Darüber hinaus hat die erfindungsgemäße Gestaltung der Befestigungsvorrichtung 6 mit Integration eines Federrückstellelementes den Vorteil, daß sich eine vollkommene Spielfreiheit in der Gesamtanordnung von Betätigungspedal 1 und Pedalblock 7 ergibt, weil in der Ruhestellung des Bremspedals 1 die Druckrolle 14 über den tiefsten Punkt der Kurvenbahn 15 hinausfährt und damit am Bremspedal 1 eine zur Federkraft der Bremskraftverstärkerrückstellung entgegengesetzte Kraft wirkt, die das unter Umständen durch Fertigungstoleranzen vorhandene Spiel ausgleicht.

Aus der Figur 1 ist darüber hinaus ersichtlich, daß der Pedalkörper 2 im Bereich der Verbindungsvorrichtung 4 mit einem Langloch 16 versehen ist. In das Langloch 16 ist ein quer zur Pedalkörperlängsachse verlaufener Stift 17 eingesetzt, der Bestandteil der Verbindungsvorrichtung 4 ist und fest mit einer Schubstange 18 verbunden ist, die durch Bewegung in Richtung des Pfeiles P einen Druckaufbau innerhalb der Bremsanlage des Straßenfahrzeuges bewirkt. Durch das Langloch 16 ist gewährleistet, daß die Schubstange 18 eine vollkommen lineare Bewegung ausführen kann und jegliche Verkantung bei der Verschwenkung des Betätigungspedales 1 ausgeschlossen ist.

### Bezugszeichenliste:

- 1.: Betätigungspedal
- 2.: Pedalkörper
- 3.: Betätigungstrittfläche
- 4.: Verbindungsvorrichtung
- 5.: Bremskraftverstärkermodul
- 6.: Befestigungsvorrichtung
- 7.: Pedalblock
- 8.: Metallkern
- 9.: Kunststoffummantelung
- 10.: Auflageschicht
- 11.: Lagerfläche
- 12.: Drehlager
- 13.: Stiftelement
- 14.: Druckrolle
- 15.: Kurvenbahn
- 16.: Langloch
- 17.: Stift
- 18.: Schubstange

## Patentansprüche

1. Betätigungspedal (1) für die Bremsanlage eines Straßenfahrzeuges mit einer Befestigungsvorrichtung (6) zur Festlegung des Betätigungspedales (1) in einem Drehlager (12) an einem karosseriefesten Pedalblock (7) des Fahrzeuges, einer Verbindungsvorrichtung (4) zu einem Bremskraftverstärkermodul (5), einem Pedalkörper (2) und einer Betätigungstrittfläche (3), **dadurch gekennzeichnet, dass**
der Pedalkörper (2) mindestens einen innenliegenden Metallkern (8) und eine den Metallkern (8) umgebende Kunststoffummantelung (9) aufweist, und
in die Kunststoffummantelung (9) eine Lagerfläche (11) integriert ist, die Bestandteil des Drehlagers ist.

2. Betätigungspedal nach Anspruch 1,
**dadurch gekennzeichnet, daß**
die Befestigungsvorrichtung (6) mit der Kunststoffummantelung (9) einstückig ausgeführt ist.

3. Betätigungspedal nach Anspruch 1 oder 2,
**dadurch gekennzeichnet, daß**
der Metallkern (8) ein Stahlblechkern ist.

4. Betätigungspedal nach einem der Ansprüche 1 bis 3,
**dadurch gekennzeichnet, daß**
die Kunststoffummantelung (9) aus PA 6 oder PA 6.6/CF besteht.

5. Betätigungspedal nach einem der Ansprüche 1 bis 4,
**dadurch gekennzeichnet, daß** die Betätigungstrittfläche (3) eine Auflageschicht (10) aus Polyurethan aufweist, und daß es durch ein Verfahren herstellbar ist, wobei die Betätigungstrittfläche (3) im Zweikomponentenverfahren an den Pedalkörper (2) angespritzt wird.

6. Betätigungspedal nach einem der Ansprüche 1 bis 5,
**dadurch gekennzeichnet, daß**
die Kunststoffummantelung (9) des Pedalkörpers (2) einstückig mit diesem ausgestaltete Anbauelemente für Bremslichtschalter, Lagerungen und Federrückholmechanismen aufweist.

7. Betätigungspedal nach einem der Ansprüche 1 bis 6,
**dadurch gekennzeichnet, daß**
die Befestigungsvorrichtung (6) ein Stiftelement (13) aufweist, welches an seinem freien, der Befestigungsvorrichtung (6) abgewandten Ende mindestens eine gefederte Druckrolle (14) aufweist, die bei Verschwenkung des Betätigungspedales (1) um das Drehlager (12) der Befestigungsvorrichtung auf einer korrespondierenden Kurvenbahn (15) am karosseriefesten Pedalblock (7) abrollt, wobei in der Ruhestellung des Betätigungspedals die Druckrolle sich 1-2° oberhalb des tiefsten Punktes der Kurvenbahn (14) befindet.

8. Betätigungspedal nach einem der Ansprüche 1 bis 7,
**dadurch gekennzeichnet, daß**
der Pedalkörper (2) ein Langloch (16) aufweist, in dem eine Schubstange (18) der Verbindungsvorrichtung (4) zum Bremskraftverstärkermodul (5) verschieblich angeordnet ist.

## Claims

1. Actuating pedal (1) for the braking system of a road vehicle, with a securement device (6) for locking the actuating pedal (1) in a pivot bearing (12) on a pedal block (7) integral with the vehicle bodywork, with a connecting device (4) to a braking force booster unit (5), a pedal body (2) and an actuating tread (3), **characterised in that** the pedal body (2) comprises at least one internally located metal core (8) and a plastics casing (9) enclosing the metal core (8), and a bearing surface (11) is integrated into the plastics casing (9), the bearing surface being a constituent part of the pivot bearing.

2. Actuating pedal according to claim 1, **characterised in that** the securement device (6) is fabricated as one part with the plastics casing (9).

3. Actuating pedal according to claim 1 or 2, **characterised in that** the metal core (8) is a sheet steel core.

4. Actuating pedal according to one of claims 1 to 3, **characterised in that** the plastics casing (9) consists of PA 6 or PA 6.6/CF.

5. Actuating pedal according to one of claims 1 to 4, **characterised in that** the actuating tread (3) comprises a supporting layer (10) of polyurethane, and that it is produced by a method in which the actuating tread (3) is injection moulded into the pedal body (2) in a two-component process.

6. Actuating pedal according to one of claims 1 to 5, **characterised in that** the plastics casing (9) of the pedal body (2) comprises add-on elements designed in one piece with the pedal body, for brake light switches, bearings and spring return mechanisms.

7. Actuating pedal according to one of claims 1 to 6, **characterised in that** the securement device (6) comprises a pin element (13), which include at its free end facing away from the securement device (6) a spring-loaded pressure roller which, when the actuating pedal (1) swivels about the pivot bearing (12) of the securement device, rolls on a corresponding cam path (15) on the pedal block (7) fixed to the vehicle bodywork, wherein in the rest position of the actuating pedal the pressure roller is located 1-2° above the lowest point of the cam path (14).

8. Actuating pedal according to one of claims 1 to 7, **characterised in that** the pedal body (2) has an oblong hole (16) in which is arranged a connecting rod (18) of the connecting device (4) to the braking force booster unit.

## Revendications

1. Pédale d'actionnement (1) pour le système de freinage d'un véhicule routier comportant un dispositif de fixation (6) pour fixer la pédale d'actionnement (1) dans un palier rotatif (12) sur un bloc de pédale (7) du véhicule, fixé à la carrosserie, un dispositif de raccordement (4) à un module de freinage assisté (5), un corps de pédale (2) et un plateau d'actionnement (3), **caractérisée en ce que** le corps de pédale (2) comporte au moins un noyau métallique interne (8) et une gaine en plastique (9) entourant le noyau métallique (8) et **en ce que**, dans la gaine en plastique (9), est intégrée une surface de palier (11), laquelle fait partie intégrante du palier rotatif.

2. Pédale d'actionnement selon la revendication 1, **caractérisée en ce que** le dispositif de fixation (6) est réalisé d'un seul tenant avec la gaine en plastique (9).

3. Pédale d'actionnement selon la revendication 1 ou 2, **caractérisée en ce que** le noyau métallique (8) est un noyau en tôle d'acier.

4. Pédale d'actionnement selon l'une quelconque des revendications 1 à 3, **caractérisée en ce que** la gaine en plastique (9) est composée de PA 6 ou de PA 6.6/CF.

5. Pédale d'actionnement selon l'une quelconque des revendications 1 à 4, **caractérisée en ce que** le plateau d'actionnement (3) comporte une couche d'appui (10) en polyuréthane et **en ce qu'**elle peut être fabriquée par un procédé, dans lequel le plateau d'actionnement (3) est injecté sur le corps de pédale (2) dans un procédé à deux composants.

6. Pédale d'actionnement selon l'une quelconque des revendications 1 à 5, **caractérisée en ce que** la gaine en plastique (9) du corps de pédale (2) comporte des éléments auxiliaires réalisés d'un seul tenant avec celui-ci pour des interrupteurs d'éclairage stop, des paliers et des mécanismes de retour élastique.

7. Pédale d'actionnement selon l'une quelconque des revendications 1 à 6, **caractérisée en ce que** le dispositif de fixation (6) comporte un élément en goupille (13), lequel comprend, sur son extrémité libre, opposée au dispositif de fixation (6), au moins un rouleau presseur à ressort (14) qui, lors du basculement de la pédale d'actionnement (1) autour du palier rotatif (12) du dispositif de fixation, roule sur un rail incurvé correspondant (15) sur le bloc pédale (7) fixé à la carrosserie, sachant que, dans la position de repos de la pédale d'actionnement, le rouleau presseur se trouve 1 à 2° au-dessus du point le plus bas de la trajectoire incurvée (14).

8. Pédale d'actionnement selon l'une quelconque des revendications 1 à 7, **caractérisée en ce que** le corps de pédale (2) comporte un trou oblong (16) dans lequel est disposé, de manière mobile, une bielle (18) du dispositif de raccordement (4) au module de freinage assisté (5).
